Europäisches Patentamt

**European Patent Office**

Office européen des brevets

(19)

(11) Publication number: **0 006 350**
**B1**

(12) **EUROPEAN PATENT SPECIFICATION**

(45) Date of publication of patent specification: **27.04.83**

(51) Int. Cl.³: **G 01 B 5/255**

(21) Application number: **79301134.7**

(22) Date of filing: **13.06.79**

(54) Apparatus to aid alignment of motor vehicle wheels.

(30) Priority: **14.06.78 AU 4721/78**

(43) Date of publication of application:
**09.01.80 Bulletin 80/1**

(45) Publication of the grant of the patent:
**27.04.83 Bulletin 83/17**

(84) Designated Contracting States:
**AT BE CH DE FR GB IT LU NL SE**

(56) References cited:
**DE - A - 1 548 203**
**FR - A - 1 245 716**
**US - A - 1 829 133**
**US - A - 2 061 326**
**US - A - 2 556 227**
**US - A - 4 144 652**

(73) Proprietor: **Pavitt, Frederick Charles**
**2-54, Avoca Street**
**Randwick New South Wales 2031 (AU)**

(72) Inventor: **Pavitt, Frederick Charles**
**2-54, Avoca Street**
**Randwick New South Wales 2031 (AU)**

(74) Representative: **Westwood, Edgar Bruce et al,**
**STEVENS, HEWLETT & PERKINS 5, Quality Court**
**Chancery Lane**
**London WC2A 1HZ (GB)**

Courier Press, Leamington Spa, England

Apparatus to aid alignment of motor vehicle wheels

The present invention relates to motor vehicle wheel aligning apparatus and more particularly but not exclusively to apparatus which aids in the correct alignment of motor vehicle wheels so as to have a desired "toe-in" and of the type comprising a bar having a longitudinal straight edge to engage a wheel resting on a surface.

Conventional apparatus used to adjust the "toe-in" of the front wheels of motor vehicles is generally cumbersome and time-consuming in operation and accordingly there has been a need for a simple device which aids in the aligning of motor vehicle wheels so as to have the correct "toe-in".

US—PS 2 556 227 discloses a wheel alignment apparatus comprising a bar having two spaced straight edges to engage, at angularly spaced locations, a vehicle wheel resting on a surface. The bar is mounted on a support structure including wheels which make the bar self-supporting in a horizontal attitude and the apparatus is moved over the surface on the wheels until the straight edges merely rest against the vehicle wheel.

US—PS 1 829 133 discloses a wheel alignment apparatus in which a single edge is provided to engage the vehicle wheel at two angularly spaced locations, and such apparatus cannot therefore be used to determine the toe-in of the front wheels of a motor vehicle.

US—PS 2 061 326 disclosed an apparatus similar to US—PS 2 556 227 in comprising a horizontal bar having two spaced straight edges to engage a vehicle wheel at angularly spaced locations, but is of relatively heavy construction and includes a fixed base frame comprising a pedestal on which the horizontal bar carrying the two straight edges is mounted for pivotal movement about a vertical axis, and a turntable on which the vehicle wheel has to be positioned.

Other prior devices for use in the alignment of vehicle wheels are suggested in US—PS 4 144 652 (published after the priority date), FR—PS 1 245 716 and DB—PA 1 548 203.

The prior devices do not provide an apparatus which easily measures the toe-in of the front wheels of a motor vehicle. More particularly, the prior apparatus is generally complex and therefore expensive to manufacture.

It is the object of the present invention to overcome or substantially ameliorate the above disadvantages.

The invention concerns an apparatus of the type specified above, characterised by two disc members attached to the bar and extending therefrom so as to be generally normal to the edge, each disc member having an arcuate edge adapted to engage the surface, the bar in use being biased under the influence of gravity so that the edge engages the wheel at two angularly spaced locations which are horizontally aligned, and a rod attached to the bar and extending generally normal to the bar edge so that in use the rod is generally horizontal.

The present invention, particularly in its preferred form, provides a cheap easily-used device which is just as applicable to the handy-man situation as to use by the trade.

A preferred form of the present invention will now be described by way of example with reference to the accompanying drawings in which;

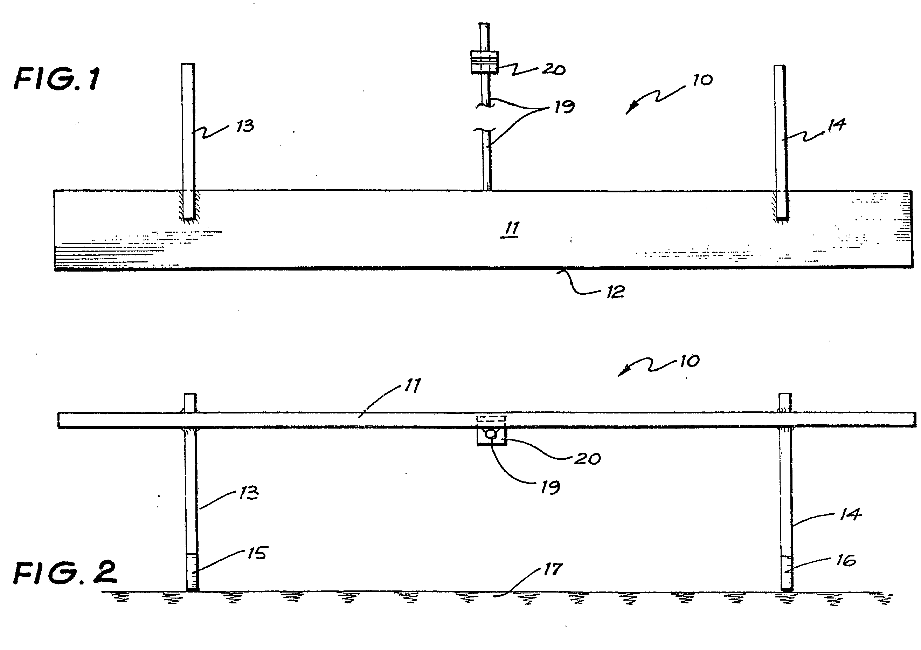

Figure 1 is a plan view of an apparatus to aid in the aligning of motor vehicles;

Figure 2 is a front elevation of the apparatus of Figure 1;

Figure 3 is an end elevation of the apparatus depicted in Figure 2; and

Figure 4 is a modification of the apparatus of Figures 1 to 3.

The apparatus 10 comprises a bar 11 which has a longitudinal edge 12 and two plate members 13 and 14. The two plate members 13 and 14 extend in generally parallel planes which planes intersect the longitudinal axis of the bar 11 at 90°. The plate members 13 and 14 have curved peripheral surfaces 15 and 16 which are adapted to engage the ground surface 17 upon which a wheel 18 of a motor vehicle is resting. The surfaces 15 and 16 are adapted to engage the ground surface 17 to maintain the edge 12 parallel to the ground surface 17.

In operation the apparatus 10 is located so as to abut a tyre 18 of a motor vehicle so that the edge 12 contacts the tyre at two angularly spaced positions so that the edge extends generally within a plane tangential to the edge of the tyre. Additionally, the plate members 13 and 14 are adapted to allow the apparatus 10 to roll on the ground surface 17 so that the edge 12 abuts and contacts the tyre 18 at two spaced locations. The bar 11 is beared towards the tyre under the influence of gravity. So that the "toe-in" of the motor vehicle front wheels may be measured, two of the apparatus 10 are employed, one against each of the front wheels of the vehicle. With the tyres pointing in a generally forward direction the distance is measured between the two bars 12 of the two apparatuses 10 which are resting against the inner surfaces of the tyres. The two measurements are taken and compared to determine the "toe-in". The measurements are between points on the two bars, which points are horizontally below the most forward and rearward points of the diameter of the tyre. The apparatus 10 may also be used to measure the angular displacement of the rear wheels of a vehicle by again placing the two bars against one of the rear wheels and comparing the angular displacement of the bar with respect to the longitudinal axis of the vehicle.

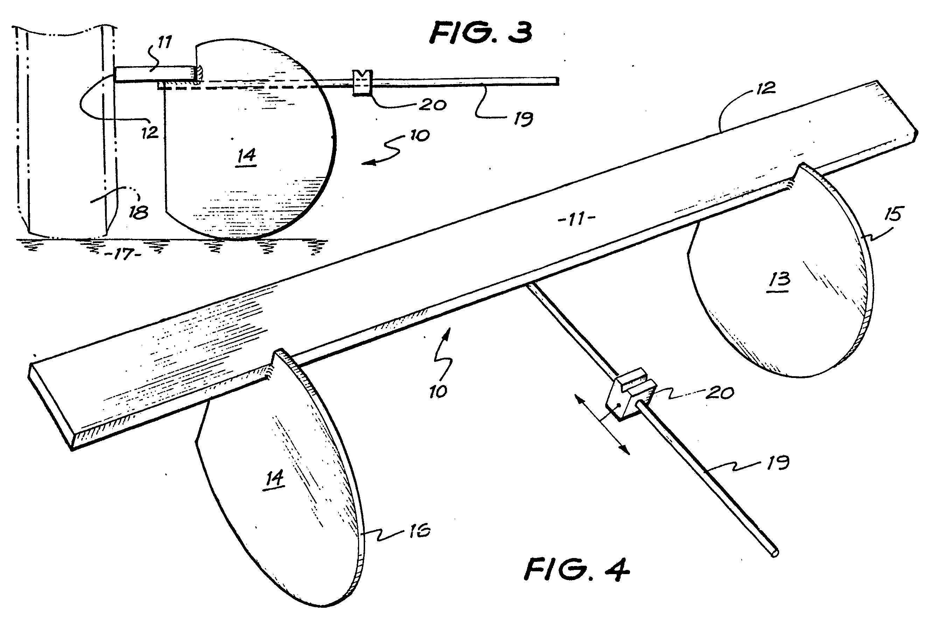

With reference now to Figure 4 wherein the apparatus 10 is provided with a rod 19 to which is slidably attached a notched part 20 adapted to receive a length of string or rope. This arrangement enables the alignment of tyres on for example, trucks having differently spaced rearward and frontward tyres.

**Claims**

1. An apparatus to aid the aligning of motor vehicle wheels, said apparatus comprising
a bar (11) having a longitudinal straight edge (12) to engage a wheel (18) resting on a surface (17), characterised by two disc members (13, 14) attached to the bar (11) and extending therefrom so as to be generally normal to the edge (12), each disc member (13, 14) having an arcuate edge (15, 16) adapted to engage the surface (17), the bar (11) in use being biased under the influence of gravity so that the edge (12) engages the wheel (18) at two angularly spaced locations which are horizontally aligned, and a rod (19) attached to the bar (11) and extending generally normal to the bar edge (12) so that in use the rod (19) is generally horizontal.

2. The apparatus of Claim 1 further including a notched part (20) slidable along the rod (19) and adapted to engage and retain a flexible line.

**Revendications**

1. Dispositif pour aider l'alignment des roues d'une voiture automobile, et comprenant
une barre (11) ayant un bord (12) longitudinal rectiligne apte à s'engager contre une roue (18) qui repose sur un surface (17), dispositif caractérisé en ce qu'il comprend aussi deux éléments (13, 14) en forme de disque qui sont attachées à la barre (11) et qui s'étendent de celle-ci afin de se trouver généralement perpendiculaires au bord (12), chaque élément (13, 14) en forme de disque ayant un bord arqué (15, 16) apte à engager la surface (17), et la barre (11), en emploi, se trouvant poussée sous l'influence de la gravité afin que le bord (12) s'engage contre la roue (18) à deux points angulairement espacés l'un de l'autre et alignés horizontalement, et une tige (19) qui est attaché à la barre (11) et s'étend généralement perpendiculairement au bord (12) de la barre afin que la tige, en emploi, sois généralement horizontale.

2. Dispositif selon la revendication 1 qui comprend en outre une partie encochée qui peut être glissée le long de la tige (19) et qui est apte à s'engager avec une ligne flexible afin de retenir celle-ci.

**Patentansprüche**

1. Hilfvorrichtung zum Ausrichten von Autorädern und bestehend aus
einer Stange (11) mit einem geraden Längsrand (12) zum Angreifen eines auf einer Oberfläche (17) liegenden Rades (18), gekennzeichnet durch zwei Scheibenglieder (13, 14), die an der Stange (11) befestigt sind und sich von diesem allgemein senkrecht zum Rand (12) erstrecken, wobei jedes Scheibenglied (13, 14) eine bogenförmigen Rand (15, 16) aufweist, der sich der Oberfläche (17) anpasst, und die Stange (11) bei ihrer Benutzung unter Schwerkraftwirkung liegt so dass der Rand (12) das Rad (18) an zwei Winkelabstand aufweisenden und wagerecht ausgerichteten Stellen angreift, sowie durch einen Stab (12) der an der Stange (11) befestigt ist und sich allgemein senkrecht zum Stangenrand (12) erstreckt, so dass bei seiner benutzung der Stab (19) algemein wagerecht liegt.

2. Hilfsvorrichtung nach Anspruch 1 die ausserdem einen gekerbten Teil (20) aufweist der entlang den Stab (19) gleitbar ist und zum Angreifen und Halten einer biegsamen Linie dient.

FIG.1

13

20

19

10

14

11

12

FIG.2

10

11

20

19

13

14

15

16

17

0 006 350

**FIG. 3**

11

20

19

12

14

10

18

-17-

**FIG. 4**

12

-11-

15

13

10

20

19

14

16

2

0 006 350